# EUROPÄISCHE PATENTSCHRIFT

(11) **EP 3 171 291 B1**
(45) Veröffentlichungstag und Bekanntmachung des Hinweises auf die Patenterteilung: **19.09.2018**
(21) Anmeldenummer: 15195540.8
(22) Anmeldetag: 20.11.2015
(51) Int. Cl.: G06K 7/10

(54) **VERFAHREN UND ABFRAGEVORRICHTUNG ZUR ABFRAGE VON DATEN VON EINEM PASSIVEN ELEMENT**
METHOD AND INQUIRING DEVICE FOR REQUESTING DATA FROM A PASSIVE ELEMENT
PROCÉDÉ ET DISPOSITIF D'INTERROGATION DE DONNÉES PROVENANT D'UN ÉLÉMENT PASSIF

(43) Veröffentlichungstag der Anmeldung: 24.05.2017
(73) Patentinhaber: Pro-micron GmbH & Co. KG, 87600 Kaufbeuren (DE)
(72) Erfinder: CHAABANE, Malek, 81673 München (DE); WIEDBRAUK, André, 86899 Landsberg (DE)
(74) Vertreter: Raffay & Fleck

(56) Entgegenhaltungen:
- WO-A1-2006/061703
- CN-A- 103 279 777
- US-A1- 2014 043 946

## Beschreibung

Die Erfindung betrifft ein Verfahren zur drahtlosen Abfrage von Daten von einem passiven, nach dem Prinzip der Verzögerungsleitung (sog. "Delay-Line") arbeitenden Element, insbesondere von einem solchen Oberflächenwellen-Bauteil (sog. "SAW-Bauteil"), mit den Merkmalen des Oberbegriffs des Patentanspruchs 1. Sie betrifft ferner eine Abfragevorrichtung zum drahtlosen Abfragen von Daten solcher Elemente mit den Merkmalen des Oberbegriffs des Patentanspruchs 8.

In verschiedenen technischen Anwendungsgebieten werden inzwischen Oberflächenwellen-Bauteile, so genannte SAW-Bauteile, eingesetzt. So werden SAW-Bauteile, die nach dem Delay-Line-Prinzip arbeiten, als Identifikationselemente, sog. ID-Tags, eingesetzt. Es werden aber auch SAW-Sensoren verwendet, um verschiedene Messparameter zu erfassen bzw. zu überwachen. Zu den mit derartigen SAW-Sensoren durchführbaren Messungen zählen insbesondere Temperaturmessungen oder auch Druckmessungen, aber auch (mechanische) Spannungsmessungen und Kraftmessungen. SAW-Bauteile haben dabei allgemein den besonderen Vorteil, dass sie vergleichsweise robust sind und auch unter widrigen Umgebungsbedingungen, wie insbesondere bei hohen Temperaturen, eingesetzt werden können.

Derartige SAW-Bauteile werden typischerweise drahtlos fernabgefragt. Dabei werden oftmals zwei grundsätzlich unterschiedliche Typen von Bauteilen bzw. Abfragemethoden verwendet:
Sogenannte SAW-Resonatoren werden mit einer Frequenz angeregt, typischerweise mehrfach hintereinander mit einer innerhalb eines Frequenzbandes variierenden Anregungsfrequenz, wobei diese Resonatoren mit einer sensortypischen Resonanzfrequenz antworten, die - bei einem Einsatz der SAW-Resonatoren als Sensorelemente - neben einer Abhängigkeit von der Sensorgeometrie auch eine Abhängigkeit von der mit dem Sensor zu erfassenden Messgröße, zum Beispiel einer Messtemperatur, zeigt. Das von dem SAW-Bauteil zurückerhaltene Antwortsignal wird hinsichtlich seiner Frequenzlage ausgewertet, und es wird aus dieser auf den Messwert geschlossen. In der Praxis erfolgt dabei eine Betrachtung der verschiedenen Antwortsignale auf die in dem Frequenzband variierten Anregungssignale, wobei aus den verschiedenen Antwortsignalen ein tatsächliches Messergebnis erhalten, zum Beispiel gemittelt, wird.

Eine zweite Art von SAW-Bauteilen arbeitet nach dem Prinzip der Verzögerungsleitung, sie werden auch als "Delay-Line SAWs" bezeichnet. Bei diesen Bauteilen gibt das SAW-Bauteil, z.B. ein SAW-Sensor, eine Antwort mit derselben Frequenz, die das Erregersignal aufweist, die Informationen über die von dem SAW-Bauteil rückübermittelten Daten sind in der zeitlichen Verzögerung des Antwortsignals gegenüber der Anregung, dem so genannten "Delay", enthalten. Diese Verzögerung kann z.B. einfach eine Identifikation ausdrücken, verändert sich bei einer Verwendung solcher SAW-Bauteile als SAW-Sensoren je nach dem Zustand des so beobachteten Parameters, zum Beispiel abhängig von der mit einem solchen SAW-Sensor zu erfassenden Temperatur. Diese Verzögerung gilt es entsprechend zu bestimmen und auszuwerten.

Aktuell werden SAW-Bauteile, die nach dem Prinzip der Verzögerungsleitung arbeiten, u.a. mit einem Verfahren ausgelesen, bei dem ein Hochfrequenzsignal, z.B. einem Signal mit einer Frequenz im Bereich von 2,4 bis 2,5 GHz, insbesondere mit einer Frequenz aus dem Bereich von 2,4 bis 2,4835 GHz, als Signalpuls zur Anregung des SAW-Bauteils ausgesendet wird, ein Antwortsignalpuls des SAW-Bauteils empfangen wird, dieses Antwortsignal des SAW-Bauteils in einem Mischer mit einem aus einem Lokaloszillator (LO) stammenden Hochfrequenzsignal, wie es auch für den Signalpuls der Anregung bereitgestellt worden ist, gemischt wird und das Ausgangssignal des Mischers, welches faktisch ein Gleichstromsignal ist, zur Bestimmung eines auszulesenden Datums, sei dies eine einfache Identifikation oder auch ein Sensordatum, zum Beispiel ein Temperaturmesswert, ausgewertet wird. Hierbei wird also entsprechend mit einer homodynen Detektion gearbeitet. Beschrieben ist diese Vorgehensweise zum Beispiel in dem Artikel "Readout Unit for Wireless SAW Sensors and ID-Tags" der Autoren Andreas Stelzer, Stefan Schuster, Stefan Scheiblhofer in "Proc. 2nd Int. Symp. Acoust. Wave Dev. for Future Mobile Comm. Syst.", (Chiba, Japan), März 2004, Seiten 37-44. Ausführungen zum Auslesen von nach dem Prinzip der Verzögerungsleitung arbeitenden SAW-Sensoren finden sich zudem auch in der DE 602 03 805 T2 in der allgemeinen Einleitung und der Beschreibung zu dem dort geschilderten Stand der Technik sowie in der US 8,240,911 B1, dort insbesondere in der Figur 4 und der diesbezüglichen Beschreibung.

Problematisch bei dieser Vorgehensweise ist, dass bei diesem Mischen des Antwortsignals des Bauteils und des Erregersignals Signalanteile, die das Antwortsignal überlagern, zum Beispiel parasitäre Einkopplungen der Sendefrequenz in den Empfangszweig, und weiterhin auch ein in dem Empfangszweig mit eintreffendes 1/f-Rauschsignal ebenfalls faktisch auf eine Frequenz 0 heruntergemischt, also in einen Gleichstromanteil überführt werden, so dass auch diese Signalanteile einen Beitrag zu dem resultierenden Gleichstromsignal, welches das Messergebnis repräsentieren soll, liefern. Dieser parasitäre Beitrag kann aus dem Gleichstromsignal jedoch nicht mehr ausgesondert werden, so dass er zu einem durchaus erheblichen Messfehler führt. Hierbei treten Fehler von mehreren Prozent, in Extremfällen bis zu 30 % auf. In der Praxis werden daher erhebliche Anstrengungen unternommen, um einerseits parasitäre Einkopplungen des Sendesignals in den Empfangszweig zu verhindern, andererseits das 1/f-Rauschen so weit als möglich zu unterdrücken. Diese Anstrengungen führen zu aufwändig gestalteten und damit kostspieligen Lesegeräten, können in der Praxis aber auch dann nicht immer zuverlässig Fehler in der Bestimmung der Übermittelten Daten verhindern.

Diese grundsätzlichen Erwägungen gelten dabei prinzipiell nicht nur für SAW-Bauteile, sondern für jedweden anderen möglichen passiven Typ von Bauteilen bzw. Elementen, der mit einer entsprechenden Antwort nach dem Prinzip der Verzögerungsleitung arbeitet.

Hier nun Abhilfe zu schaffen und ein Verfahren sowie eine Abfragevorrichtung zur drahtlosen Abfrage von Daten von einem passiven, nach dem Prinzip der Verzögerungsleitung arbeitenden Element, insbesondere von einem solchen Oberflächenwellen-Bauteil anzugeben, mit welchem Abfragen mit einer vereinfachten Bauform der Abfragevorrichtung und zugleich einer verbesserten Genauigkeit und einer geringeren Fehleranfälligkeit möglich sind, ist Aufgabe der vorliegenden Erfindung.

Diese Aufgabe wird erfindungsgemäß gelöst durch ein Verfahren mit den Merkmalen des Patentanspruchs 1. Vorteilhafte Weiterbildungen dieses Verfahrens sind in den Patentansprüchen 2 bis 7 angegeben. Hinsichtlich einer neuartigen Abfragevorrichtung ist die Lösung der oben bezeichneten Aufgabe in einer solchen mit den Merkmalen des Anspruchs 8 zu sehen. Vorteilhafte Weiterbildungen einer solchen Abfragevorrichtung sind in den Patentansprüchen 9 bis 11 bezeichnet.

Bei dem erfindungsgemäßen Verfahren zur drahtlosen Abfrage von Daten von einem passiven, nach dem Prinzip der Verzögerungsleitung arbeitenden Element, insbesondere von einem solchen Oberflächenwellen-Bauteil, wird - in Übereinstimmung mit dem Vorgehen nach dem Stand der Technik - ein erstes Hochfrequenzsignal einer ersten Frequenz zu dem Element gesendet und wird das Element so zum Aussenden eines Antwortsignals angeregt. Weiterhin wird, wie auch im Stand der Technik, das Antwortsignal empfangen und in einem Mischer mit einem Referenzsignal gemischt und dabei ein Datensignal erzeugt, welches zum Extrahieren von Rohdaten ausgewertet wird. Das erste Hochfrequenzsignal wird dabei als Frequenzpuls zu dem Element gesendet. Die Frequenz kann dabei z.B. in einer Spanne zwischen 2,4 GHz und 2,4385 GHz liegen, wobei die Bandbreite des Signals durch das Ein- und Ausschalten des Signals zustande kommt und im Bereich von ca. 100 kHz und ca. 2 MHz liegen kann. Die Pulslänge des ersten Hochfrequenzsignals wird typischerweise derart gewählt, dass ein eingeschwungener Zustand entsteht. Sobald dieser eingeschwungene Zustand hergestellt ist, kann der Sendevorgang abgeschaltet werden. "Einschwingen" bedeutet in diesem Zusammenhang, dass die Antworten der Reflektoren auf dem SAW-Bauteil oder anderen Element gestaffelt nach ihrer Position auf dem Element eintreffen. Im eingeschwungenen Zustand sind alle Antworten eingetroffen. Typische Pulslängen können im Bereich einige *µ*s liegen. Auf diese Weise wird verhindert, dass das Senden des Hochfrequenzsignals und das Empfangen des Antwortsignals zeitgleich geschehen und dabei eine Überlagerung des ersten Hochfrequenzsignals mit dem Antwortsignal erfolgt.

Während nun beim Stand der Technik das Referenzsignal dem ersten Hochfrequenzsignal entspricht, wird erfindungsgemäß als Referenzsignal ein aus derselben Frequenzreferenz wie das erste Hochfrequenzsignal erzeugtes zweites Hochfrequenzsignal mit einer von der ersten Frequenz abweichenden zweiten Frequenz verwendet. Hierdurch wird durch das Mischen des Antwortsignals des Elements, welches dieselbe Frequenz wie das erste Hochfrequenzsignal hat, mit dem Referenzsignal kein im Wesentlichen auf die Frequenz null heruntergemischtes, ein Gleichstromsignal darstellendes Datensignal erzeugt, sondern ein weiteres Zwischenfrequenzsignal. Typischerweise wird das zweite Hochfrequenzsignal aus einem Lokaloszillator (LO) generiert, der von derselben Frequenzreferenz gespeist ist wie der Lokaloszillator, aus dem das erste Hochfrequenzsignal entstammt. Das zweite Hochfrequenzsignal kann dabei in seiner Frequenz etwa 4 bis 6 MHz ober- oder unterhalb der Frequenz des ersten Hochfrequenzsignals liegen. Dass das zweite Hochfrequenzsignal nicht etwa aus einer beliebigen Quelle stammt, sondern aus derselben Frequenzreferenz abgeleitet ist wie das erste Hochfrequenzsignal ist für die erfindungsgemäße Funktion wesentlich. Somit sind lediglich der Vervielfachungsfaktor und, da insbesondere zwei getrennte Phasenregelschleifen mit jeweils einem eigenen Spannungssteuerungsoszillator VCO (voltage control oszillator) verwendet werden, in der Regel auch das Phasenrauschen unterschiedlich. Ein weiterer Vorteil der wie oben bezeichneten Realisierung liegt darin, dass die Hochfrequenzsignale (aus dem Lokaloszillator) zum Empfang der Daten nicht zeitgleich benötigt werden, daher nur im Bedarfsfall eingeschaltet werden und sich nicht gegenseitig beeinflussen. Bei einer konventionellen Architektur eines aus dem Stand der Technik bekannten Lesegeräts sind die beiden aus dem Frequenzreferenzsignal abgeleiteten Hochfrequenzsignale (LO-Signale) dahingegen identisch und werden daher durchgehend benötigt und können so das Nutzsignal störend beeinflussen.

Um das als Zwischenfrequenzsignal (ZF) vorliegende Datensignal nun weiter auswerten zu können, wird dieses zunächst analog bandpassgefiltert und anschließend in ein digitales Datensignal gewandelt, was typischerweise in einem A/D-Wandler geschieht. Zudem wird ein Kontrollsignal erzeugt, indem in dem Mischer das erste Hochfrequenzsignal mit dem Referenzsignal gemischt wird. Das erste Hochfrequenzsignal entspricht dabei nach Frequenz und Phasenlage dem Signal, wie es als Abfragepuls zu dem Sensor gesendet worden ist. Das so gebildete Kontrollsignal wird ebenfalls digitalisiert zu einem digitalen Kontrollsignal. Nun werden beide Signale digital bandpassgefiltert, um so z.B. weiteres (auch weißes) Rauschen zu eliminieren. Schließlich werden das digitale Kontrollsignal und das digitale Datensignal in einer digitalen Signalverarbeitung derart zu einem Ergebnissignal korreliert, dass eine digitale Kohärenz (auch "Pseudokohärenz" genannt) erzielt wird. Ein durch diese Korrelation und ggf. nachfolgende weitere Verarbeitung erhaltenes Ergebnissignal, welches wiederum einem Gleichstromsignal entspricht, repräsentiert dann die von dem Element empfangenen Rohdaten. Dieses Ergebnissignal, welches einem Gleichstromsignal entspricht, ist wegen der niedrigen Frequenz (ideal gegen null) in der digitalen Signalverarbeitung vorteilhaft. Denn es treten kein bei den einschlägigen Frequenzen zu beobachtendes 1/f-Rauschen, keine Offsets, kein Übersprechen und keine weiteren Artefakte und Störungen auf, die die Signalverarbeitung behindern oder verfälschen würden.

Dadurch, dass bei dieser Vorgehensweise sowohl das in dem Mischer erzeugte Datensignal als auch durch Mischen, z.B. in demselben Mischer, erzeugte Kontrollsignal mit zum Großteil den gleichen Störeffekten, wie zum Beispiel Oberwellen des Mischers oder durch Nicht-Linearitäten der Elemente erzeugte Störeffekte und dergleichen, überlagert sind, werden diese parasitären Effekte bei der nachfolgenden digitalen Verarbeitung der digitalisierten Signale und der Korrelation zu einer digitalen Kohärenz gleichermaßen "herausgekürzt" (Systematische Effekte, wie sie z.B. durch nicht-lineare Effekte der Empfängerbauelemente hervorgerufen werden, reduzieren sich zu einem globalen Amplitudenfehler, sofern sie für alle Frequenzen gleich wirken; sie sind so zwar für einzelne Frequenzpunkte noch vorhanden; der globale Amplitudenfehler ist für Auswertung dann aber ohne Bedeutung, da stets nur Amplitudenverhältnisse berücksichtigt werden), so dass das erhaltene Ergebnissignal die Sensordaten mit einem weitaus geringeren Fehler repräsentiert. Auch parasitäre Einkopplungen des Sendesignals stellen kein Problem dar, da das Sendesignal und das Empfangssignal unterschiedliche Frequenzen haben, so dass parasitäre Einkopplungen und das Empfangssignal aufgrund ihrer unterschiedlichen Frequenzen und Laufzeiten separiert werden können. Dabei können bei dieser Vorgehensweise für eine entsprechende Abfragevorrichtung auch die ansonsten erforderlichen, umständlichen Abschirmmaßnahmen und sonstige Maßnahmen zur Unterdrückung parasitärer Effekte und des Einwirkens von Rauschen deutlich reduziert werden (Einkopplungen von äußeren Störsignalen etc. müssen in der Regel trotzdem verhindert werden), was die entsprechenden Abfragevorrichtung einfacher und damit kostengünstiger in der Herstellung werden lässt.

Dabei liegt ein besonderer Vorteil der erfindungsgemäßen Lösung, dass mit der besonderen Architektur und Arbeitsweise des Empfängers anstelle der im Stand der Technik für die bisher genutzten Architekturen und Verfahren üblichen Tiefpassfilterung eine Bandpassfilterung verwendet werden kann. Somit kann das Nutzsignal weitaus besser von Störsignalen getrennt und isoliert werden. Wenngleich für die Umsetzung der Erfindung nicht zwingend erforderlich, kann auch vorgesehen sein, auch das analoge Kontrollsignal vor dessen Wandlung in das digitale Kontrollsignal bandpasszufiltern. Dadurch wird der Einfluss von Störsignalen auf das Auslesen der Daten noch weiter verringert.

In einer möglichen Ausgestaltungsvariante des Verfahrens können das Datensignal und das Kontrollsignal zeitlich nacheinander über ein und denselben A/D-Wandler digitalisiert und der digitalen Signalverarbeitung entsprechend zeitlich nacheinander (seriell) zugeführt werden. Dabei muss dann in der digitalen Signalverarbeitung eine Zwischenspeicherung jedenfalls eines der digitalen Signale erfolgen, können insbesondere auch beide digitalen Signale zwischengespeichert werden, bevor die weitere Verarbeitung und Korrelation der Signale zum Erzeugen der digitalen Kohärenz in der digitalen Signalverarbeitung vorgenommen wird. Es ist aber unter Verwendung moderner Elektronikbausteine möglich, ohne eine Zwischenspeicherung der digitalen Signale digitales Kontrollsignal und digitales Datensignal eine Datenverarbeitung, zumindest eine digitale Bandpassfilterung in Echtzeit, durchzuführen. Hierfür können z.B. sog. Field Programmable Gate Arrays (FPGAs) mit Ausreichend Rechenkapazität und Ressourcen zum Einsatz kommen, die dann die digitale Bandpassfilterung in Echtzeit rechnen können. Nach der digitalen Bandpassfilterung der genannten digitalen Signale kann dann ggf. eine Zwischenspeicherung erfolgen, muss dies aber nicht.

Weiterhin kann bei dem Verfahren in einer Ausgestaltung für das Senden des ersten Hochfrequenzsignals und für das Empfangen des Antwortsignals ein und dieselbe Antenne verwendet werden, wobei dann das Senden und das Empfangen zeitlich nacheinander erfolgt und die Antenne entsprechend umgeschaltet wird. Diese Vorgehensweise hat den Vorteil, dass nur ein Antennenbauteil vorzusehen ist. Darüber hinaus werden Signaldämpfungen vermieden, die beispielsweise entstehen, wenn nur eine der beiden Antennen durch Annäherung an ein metallisches Objekt verstimmt wird und diese Antenne schmalbandig ist.

Wie auch bei den bisher bekannten und üblichen Verfahren gängig, kann auch bei dem erfindungsgemäßen Verfahren für das Abfragen eines Datums von dem Element eine Reihe von ersten Hochfrequenzsignalen nacheinander ausgesendet werden, wobei die erste Frequenz der Hochfrequenzsignale für jeden Sendevorgang verändert wird. Dabei wird dann für die Bildung des Kontrollsignal für die Auswertung eines mit einem auf den jeweiligen Sendevorgang erhaltenen Antwortsignal erzeugten Datensignals das erste Hochfrequenzsignal mit der für den Sendevorgang aktuell eingestellten ersten Frequenz mit dem Referenzsignal gemischt, um somit ein auf das aktuell gesendete erste Hochfrequenzsignal abgestimmtes Kontrollsignal zu erhalten.

Eine erfindungsgemäße Abfragevorrichtung zum drahtlosen Abfragen von Daten von einem passiven, nach dem Prinzip der Verzögerungsleitung arbeitenden Element weist zunächst, wie für solche Abfragevorrichtungen nach dem Stand der Technik üblich, folgende Bestandteile auf:
- Eine Einrichtung zum Erzeugen eines ersten Hochfrequenzsignals mit einer ersten Frequenz,
- eine mit der Einrichtung zum Erzeugen des ersten Hochfrequenzsignals verbindbare Sendeantenne,
- eine Empfangsantenne,
- einen ersten Signaleingang und einen zweiten Signaleingang sowie einen Signalausgang aufweisenden Mischer,
- einen mit dem Signalausgang verbundenen A/D-Wandler und
- einen mit dem A/D-Wandler verbundenen Signalprozessor.

Die Abfragevorrichtung zeichnet sich erfindungsgemäß dadurch aus, dass sie weiterhin eine Einrichtung zum Erzeugen eines Referenzsignals in Form eines zweiten Hochfrequenzsignals aus derselben Frequenzreferenz, auf der auch das erste Hochfrequenzsignal basiert, und mit einer zweiten, von der ersten Frequenz abweichenden Frequenz aufweist. Weiterhin zeichnet sich die erfindungsgemäße Abfragevorrichtung dadurch aus, dass der erste Signaleingang des Mischers mit der Einrichtung zum Erzeugen des Referenzsignals verbunden ist, dass der zweite Signaleingang wahlweise mit der Empfangsantenne oder der Einrichtung zum Erzeugen des ersten Hochfrequenzsignals verbindbar ist und dass der Signalprozessor eingerichtet ist, mit dem A/D-Wandler digitalisierte Signale zu speichern und verschiedene digitale Signale derart zu korrelieren, dass eine digitale Kohärenz hergestellt wird, und dass der Signalprozessor ferner eingerichtet ist, nach Herstellung einer digitalen Kohärenz der so korrelierten Signale aus einem dadurch gewonnenen digitalen Mischsignal von dem Element übermittelte Daten auszulesen. Die derart in erfindungsgemäßer Weise gebildete Abfragevorrichtung realisiert die oben bereits anhand des Verfahrens erläuterten Vorteile.

In einer besonderen Ausgestaltung der Vorrichtung kann diese einen Leistungsteiler oder ein vergleichbares Bauteil, wie z.B. einen Richtkoppler oder auch einen Schalter mit Dämpfungsglied, aufweisen, der mit der Einrichtung zum Erzeugen des ersten Hochfrequenzsignals verbunden ist und zwei Ausgänge aufweist. Ein erster dieser Ausgänge ist mit der Sendeantenne, ein zweiter dieser Ausgänge mit dem zweiten Signaleingang des Mischers verbindbar. Auf diese Weise kann das erste Hochfrequenzsignal mit im Wesentlichen gleicher Frequenz und Phase einerseits auf die Sendeantenne, andererseits auf den zweiten Signaleingang des Mischers gegeben werden.

In einer weiteren Ausgestaltung der erfindungsgemäßen Abfragevorrichtung sind die Sendeantenne und die Empfangsantenne durch ein einziges Bauteil, nämlich eine Sende-/Empfangsantenne gebildet, die dann über einen Schalter wahlweise mit der Einrichtung zum Erzeugen des ersten Hochfrequenzsignals oder mit dem zweiten Signaleingang des Mischers verbindbar ist.

Um hier auch hinsichtlich des zeitlichen Ablaufs eine möglichst gleichgelagerte Ausgangssituation bei der Bildung des Datensignals einerseits und der Bildung des Kontrollsignals andererseits zu erhalten, kann vorgesehen sein, dass die erfindungsgemäße Abfragevorrichtung ein Zeitvorgabeglied aufweist, welches die Sendezeit eines Signalpulses des ersten Hochfrequenzsignals zu dem Sensor auf der einen Seite und die Zeit, in der das erste Hochfrequenzsignal auf den zweiten Signaleingang des Mischers gelegt wird, auf der anderen Seite identisch vorgibt.

An dieser Stelle soll, wenngleich dies für den Fachmann sicherlich selbstverständlich sein dürfte, noch einmal betont werden, dass die vorstehend beschriebene Architektur und Verfahrensweise sowohl für rein reelle Signalverarbeitung als auch für komplexwertige Signalverarbeitung geeignet ist und entsprechend durchgeführt werden kann.

Selbstverständlich ist es möglich, mit einer erfindungsgemäßen Abfragevorrichtung auch mehrere Elemente in einem Abfrageumfeld zu adressieren und Daten von solchen Elementen abzufragen, wozu die aus dem Stand der Technik für diesen Zweck bekannten Techniken und Maßnahmen Verwendung finden können.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine schematische Darstellung des Aufbaus eines Ausführungsbeispiels einer erfindungsgemäßen Abfragevorrichtung, die für die Durchführung eines erfindungsgemäßen Verfahrens geeignet und eingerichtet ist;
- Fig. 2: die Darstellung aus Fig. 1 in einer ersten Schaltstellung der Vorrichtung beim Senden eines Hochfrequenzpulses zum Anregen eines passiven, nach dem Verzögerungsleitungsprinzip (Delay-Line-Prinzip) arbeitenden Elementes, insbesondere eines solchen SAW-Sensors;
- Fig. 3: die Darstellung aus Fig. 1 in einer zweiten Schaltstellung, in der weiterhin der Hochfrequenzpuls gesendet, zugleich aber auch ein Kontrollsignal erzeugt wird,
- Fig. 4: die Darstellung aus Fig. 1 in einer Schaltstellung beim Empfangen eines Antwortsignals vom passiven Element, insbesondere SAW-Sensor,
- Fig. 5: eine Darstellung des Frequenzspektrums in einem I/Q-Empfänger nach dem Stand der Technik,
- Fig. 6: eine Darstellung des Frequenzspektrums im I/Q-Empfänger bei erfindungsgemäßer Signalverarbeitung und
- Fig. 7: eine der Fig. 1 vergleichbare schematische Darstellung des Aufbaus eines Ausführungsbeispiels einer erfindungsgemäßen Abfrageeinrichtung, hier mit expliziter Darstellung einer komplexwertigen Signalverarbeitung.

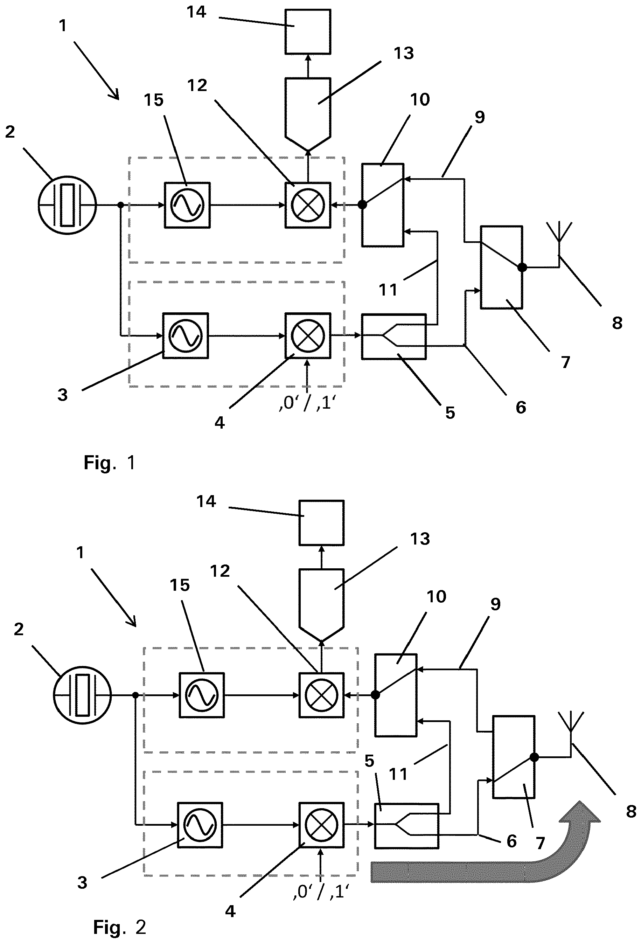

In den Figuren ist schematisch zunächst der Aufbau eines möglichen Ausführungsbeispiels einer erfindungsgemäßen Abfragevorrichtung zur drahtlosen Abfrage von Daten, insbesondere Sensordaten, von einem passiven, nach dem Prinzip der Verzögerungsleitung arbeitenden Element, insbesondere Sensor, insbesondere einem solchen SAW-Sensor, dargestellt (Figur 1). Sodann ist anhand von Schaltzuständen einer solchen Abfragevorrichtung der erfindungsgemäße Verfahrensablauf in einem Ausführungsbeispiel veranschaulicht (Figuren 2-4). In den Figuren sind dabei gleiche Elemente mit gleichen Bezugszeichen versehen. Die Figuren stellen reine Schemazeichnungen dar, sind weder insgesamt vollständige Konstruktions- oder Auslegungszeichnungen noch enthalten sie in sonstiger Weise sämtliche Details. Sie sind vielmehr für die Veranschaulichung der wesentlichen Elemente der Abfragevorrichtung und des wesentlichen Ablaufs des Verfahrens gedacht. Insoweit in der nachfolgenden Beschreibung der Einfachheit halber auf einen "Sensor" Bezug genommen wird, so soll diese Bezugnahme gleichwohl andere mögliche Elemente, die im Sinne der Erfindung verwendet werden können, mit einschließen, z.B. ID-Tags und dergleichen. Gleiches gilt für die Bezeichnung der abzufragenden Daten als "Sensordaten", womit zugleich aber auch andere Arten von übermittelten Daten, wie z.B. Identifikationsdaten oder dergleichen, mit eingeschlossen sein sollen.

In Figur 1 ist schematisch der Aufbau eines möglichen Ausführungsbeispiels einer erfindungsgemäßen Abfragevorrichtung zum drahtlosen Abfragen von Sensordaten von einem passiven, nach dem Prinzip der Verzögerungsleitung arbeitenden Sensor, insbesondere einem SAW-Sensor, dargestellt und allgemein mit dem Bezugszeichen 1 versehen. Die Abfragevorrichtung 1 in diesem Ausführungsbeispiel weist zunächst eine Frequenzquelle 2 auf. Diese Frequenzquelle 2 ist über eine Ausgangsleitung mit u.a. einem Lokaloszillator 3 verbunden, der dem Erzeugen eines ersten Hochfrequenzsignals mit einer ersten Frequenz dient. Das von dem Lokaloszillator 3 erzeugte Hochfrequenzsignal wird über einen Aufwärtsmischer 4, mit dessen ersten Eingang (LO-Eingang) der Lokaloszillator verbunden ist, und den Signalausgang (HF-Ausgang) des Mischers 4 zu einem Leistungsteiler 5 geführt. Der Mischer 4 ist für die erfindungsgemäße Abfragevorrichtung nicht wesentlich, kann auch entfallen. Ebenso wenig ist er für das erfindungsgemäße Verfahren vonnöten. Dieser Mischer 4 dient hier lediglich als Schaltelement, was dadurch angedeutet ist, dass sein zweiter Signaleingang (ZF-Eingang) mit einem "0"- bzw. einem "1"-Signal beschickt wird. Liegt dort das "0"-Signal an, so ist die Leitung abgeschaltet. Wird dort das "1"-Signal angelegt, ist die Leitung auf Durchgang geschaltet, der Lokaloszillator 3 mit dem Leistungsteiler 5 verbunden.

Eine erste, einen Ausgang des Leistungsteilers 5 darstellende Signalleitung 6 ist mit einem ersten Schalteingang eines Wechselschalters 7 verbunden, dessen Schaltausgang zu einer Sende-/Empfangsantenne 8 führt.

Ein zweiter Schalteingang des Wechselschalters 7 ist mit einer Signalleitung 9 verbunden, die auf einen ersten Schalteingang eines weiteren Wechselschalters 10 gelegt ist. Ein zweiter Schalteingang des Wechselschalters 10 ist mit über eine Signalleitung 11 mit einem zweiten Ausgang des Leistungsteilers 5 verbunden. Der Schaltausgang des Wechselschalters 10 führt zu einem Signaleingang (HF-Signaleingang) eines Abwärtsmischers 12. Der Signalausgang (ZF-Signalausgang) des Mischers 12 ist auf einen A/D-Wandler 13 gelegt, der wiederum mit einem digitalen Signalprozessor 14 verbunden ist. Ein zweiter Signaleingang des Mischers 12 (der LO-Signaleingang) ist mit einem weiteren Lokaloszillator 15 verbunden, der ebenfalls von der Frequenzquelle 2 gespeist wird und der dem Erzeugen eines Hochfrequenzsignals mit einer zweiten, von der ersten Frequenz abweichenden Frequenz dient, das als Referenzsignal Verwendung findet.

In den Figuren 2 bis 4 sind nun verschiedene Schaltzustände gezeigt, anhand derer die Funktionsweise der in dieser Ausführungsform dargestellten Abfragevorrichtung und des mit ihr durchgeführten erfindungsgemäßen Verfahrens erläutert wird.

In der in Figur 2 gezeigten Schaltstellung ist die Signalleitung 6 am Ausgang des Leistungsteilers 5 über den Wechselschalter 7 mit der Sende-/Empfangsantenne 8 verbunden. Es wird ein Sendepuls des von dem Lokaloszillator 3 erzeugten Hochfrequenzsignals über die Sende-/Empfangsantenne 8 zu einem nicht dargestellten passiven Sensorelement gesendet, was durch den in der Figur 2 dargestellten Pfeil angedeutet ist. Der Mischer 12 empfängt auf seinem LO-Signaleingang lediglich das von dem Lokaloszillator 15 bereitgestellte Hochfrequenzsignal (das Referenzsignal), auf seinem HF-Signaleingang jedoch kein Signal, da durch die Schaltstellung des Wechselschalters 10 einerseits der direkt von dem Leistungsteiler 5 kommende Zweig des Leistungsteilers 5 abgetrennt ist, andererseits durch die Schaltstellung des Wechselschalters 7 die Sende-/Empfangsantenne 8 ebenfalls nicht mit dem Mischer 12 verbunden ist. Hier wird also das erste Hochfrequenzsignal als Abfragesignal gesendet, ohne dass weitere Signale verarbeitet werden.

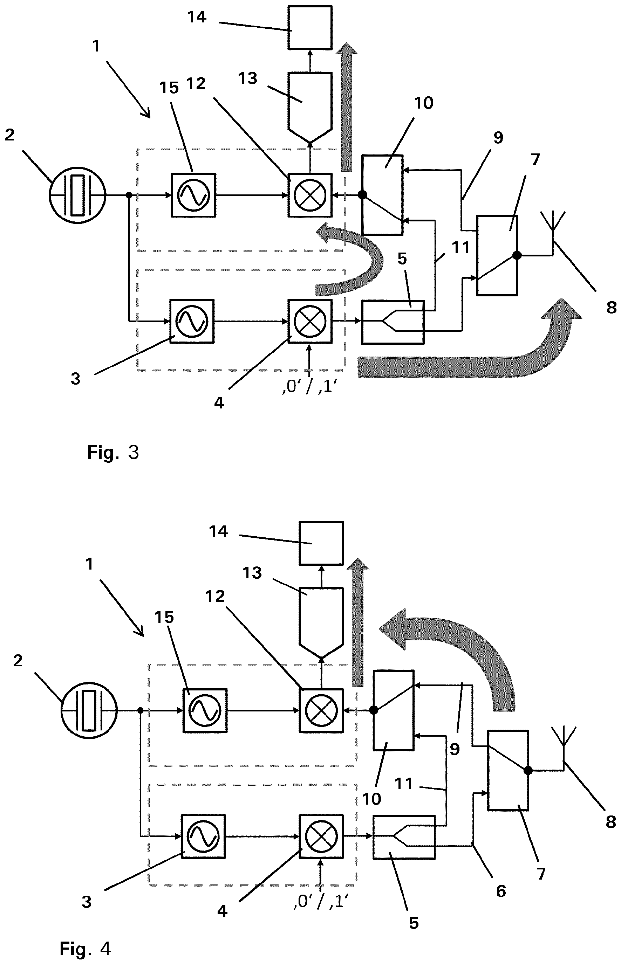

Figur 3 zeigt nun eine Schaltstellung der Abfragevorrichtung 1, in der gegenüber der in Figur 2 gezeigten Schaltstellung der Wechselschalter 10 umgelegt ist, so dass die Signalleitung 11 den zweiten Ausgang des Leistungsteiles 5 mit dem HF-Signaleingang des Mischers 12 verbindet. In der hier gezeigten Position wird weiterhin der Abfragepuls mit dem ersten Hochfrequenzsignal, welches von dem Lokaloszillator 3 erzeugt wird, über die Sende-/Empfangsantenne 8 in Richtung des Sensors gesendet (angedeutet durch den auch in Figur 2 dargestellten Pfeil). Zugleich wird nun in dem Mischer 12 ein Kontrollsignal gebildet, durch Mischen des von dem Lokaloszillator 15 erzeugten Referenzsignals mit dem von dem Lokaloszillator 3 erzeugten ersten Hochfrequenzsignal, welches auch zur Anregung des Sensors verwendet wird. Dieses Kontrollsignal wird aus dem Mischer 12 ausgehend durch den A/D-Wandler 13 digitalisiert und dem digitalen Signalprozessor 14 zugeführt. Dort wird es in einer nicht näher dargestellten Speichereinheit gespeichert. Dies ist durch den zweiten in Figur 3 dargestellten Pfeil veranschaulicht.

In Figur 4 ist nun ein Schaltzustand gezeigt, in dem der Wechselschalter 7 die Sende-/Empfangsantenne 8 von dem Leistungsteiler 5 und damit von den durch den Lokaloszillator 3 erzeugten Hochfrequenzsignalen trennt, diese vielmehr über die Signalleitung 9 und den entsprechend gegenüber der Position in Figur 3 wiederum in der Schaltstellung veränderten Wechselschalter 10 mit dem HF-Signaleingang des Mischers 12 verbindet. In dieser Schaltstellung wird über die Sende-/Empfangsantenne 8 ein von dem Sensor zurück gesendetes Antwortsignal auf den Mischer 12 gegeben, wo dieses Antwortsignal, welches die Frequenz des mit dem Lokaloszillator 3 erzeugten ersten Hochfrequenzsignals hat, mit dem von dem Lokaloszillator 15 erzeugten Referenzsignal, welches eine andere Frequenz aufweist, gemischt wird (dies ist durch die in der Figur 4 dargestellten Pfeile veranschaulicht). Das hierdurch erzeugte resultierende Signal (hier als Datensignal bezeichnet), welches wiederum ein Hochfrequenzsignal ist, wird zunächst in einem hier nicht näher dargestellten Bandpassfilter analog bandpassgefiltert und dann in dem A/D-Wandler 13 digitalisiert und dem digitalen Signalprozessor 14 zugeführt. Dort kann auch dieses digitalisierte Datensignal gespeichert werden. Es wird dann nach dem Speichern, kann dies aber auch umgehend und ohne weiteres Speichern, zunächst noch einmal digital bandpassgefiltert und dann mit dem bereits gespeicherten digitalisierten Kontrollsignal, das ebenfalls zuvor digital bandpassgefiltert worden ist, korreliert werden, und zwar in einer Weise, dass eine digitale Kohärenz der beiden so digital bandpassgefilterten digitalen Signale erreicht wird. Das so durch die Korrelation erhaltene Ergebnissignal, welches einem Gleichspannungssignal entspricht, repräsentiert dann ein von dem Sensor drahtlos abgefragtes Sensordatum.

In der Praxis wird dieser Vorgang mit mehreren unterschiedlichen Frequenzen der Lokaloszillatoren 3 und 15 wiederholt. Die Frequenzveränderung der Lokaloszillatoren erfolgt dabei in einer Weise, dass der analoge Bandpass-Filter zum Filtern des Datensignals eine feste Charakteristik aufweisen und mit einer solchen betrieben werden kann. Auf diese Weise werden dann mehrere, in der Regel eine Vielzahl von, Messwerte(n) erhalten, aus deren Gesamtheit dann ein tatsächlicher Messwert ermittelt wird.

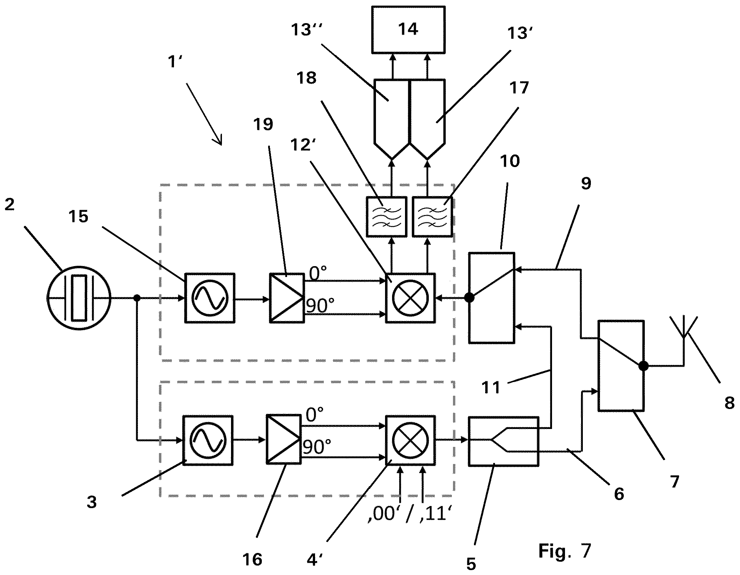

In den Figuren 1 bis 4 ist - der besseren Übersichtlichkeit halber - der Fall rein reeller Signale / Signalverarbeitung dargestellt. In der Praxis kann - und wird dies auch bevorzugt - das erfindungsgemäße Verfahren auch mit komplexwertiger Signalverarbeitung umgesetzt werden. Der Fachmann wird die entsprechend weiteren Bauteile und Schaltelemente entsprechend ergänzen. Ein Beispiel eines Aufbaus für die komplexwertige Signalverarbeitung ist dann auch noch einmal in Fig. 7 gezeigt und wird nachstehend anhand dieser Figur auch noch einmal kurz beschrieben.

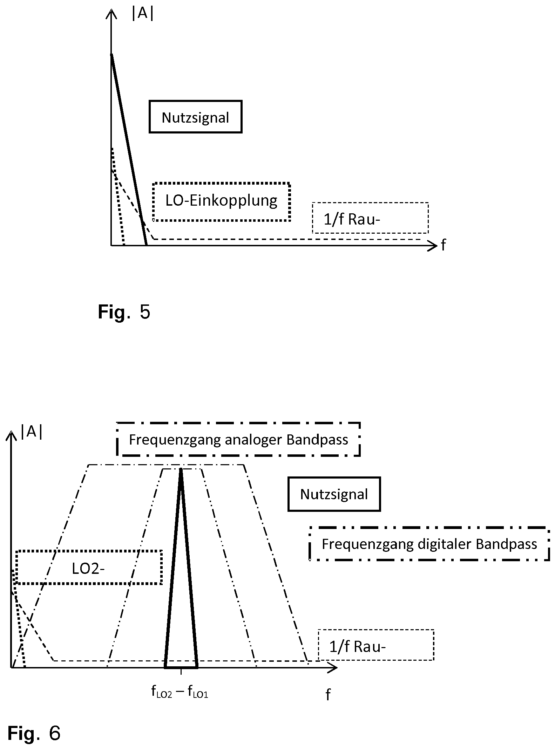

In den Figuren 5 und 6 sind - zum Vergleich und zur Veranschaulichung der Wirkweise des erfindungsgemäßen Verfahrens - das Frequenzspektrum in einem komplexwertig arbeitenden Empfänger (I/Q-Empfänger) nach dem Stand der Technik (Fig. 5) und gemäß der erfindungsgemäßen Ausführung (Fig. 6) dargestellt. Hier ist gut zu erkennen, dass beim Stand der Technik das Nutzsignal mit deutlichen Anteilen als einer Einkopplung des das Abfragesignal erzeugenden Lokaloszillators (LO-Einkopplung) und des 1/f-Rauschens überlagert ist. Diese Überlagerungen verfälschen bei der Auswertung die in dem Nutzsignal verkörperten Daten.

Hingegen ist durch die erfindungsgemäße Kombination der verschiedenen Mischvorgänge und der analogen wie digitalen Bandpassfilterung an der vorstehend näher ausgeführten Art, wie in Fig. 6 zu erkennen, eine Situation geschaffen, in der das Nutzsignal (das nun um die Differenz der Frequenzen des zweiten und des ersten Lokaloszillators, die Frequenz f = f_{LO2} - f_{LO1}, liegt) deutlich weniger von störenden Überlagerungen von Einkopplungen des zweiten Lokaloszillators (LO2-Einkopplung) und 1/f-Rauschen beeinflusst ist, weitaus deutlicher und prägnanter vorliegt, insoweit eine weit weniger verfälschte Auswertung der enthaltenen Daten erlaubt.

In Fig. 7 ist, wie bereits erwähnt, der Vollständigkeit halber eine Prinzipdarstellung gezeigt, die den Aufbau der Abfragevorrichtung 1' mit komplexwertiger Signalverarbeitung zeigt. In dieser Darstellung sind die Elemente, die in gleicher Weise auch in der Darstellung gemäß Fig. 1-4 enthalten sind, mit gleichen Bezugszeichen versehen. Diese arbeiten in gleichartiger Weise, so dass hier auf die Funktion dieser Elemente nur kurz eingegangen werden muss.

Auch bei dem in Fig. 7 dargestellten Aufbau ist eine Frequenzquelle 2 mit zwei Lokaloszillatoren 3 und 15 verbunden. Der Lokaloszillator 3 generiert ein erstes Hochfrequenzsignal, das über einen Quadraturphasengenerator 16 in zwei um 90° zueinander phasenverschobene Signalteile aufgeteilt wird, entsprechend Realteil und Imaginärteil eines komplexwertigen Signals. Diese beiden Signalanteile werden zu einem Aufwärtsmischer 4' geführt, der wiederum bloß als Schalter dient. Von dort gelangt das Signal zu dem Leistungsteiler, der über die Signalleitung 6 mit dem zu der Sende-/Empfangsantenne schaltbaren Wechselschalter 7 und über die Signalleitung 11 mit dem weiteren Wechselschalter 10 verbunden ist, zu dem auch die über den Wechselschalter 7 von der Sende-/Empfangsantenne kommende Signalleitung 9 führt. In einem Abwärtsmischer 12' können nun das jeweils an dem Schaltausgang des Wechselschalters 10 anliegende Signal und das zweite von dem Lokaloszillator 15 erzeugte und über einen Quadraturphasengenerator 19 in zwei um 90° phasenverschobene Signalteile (entsprechend Real- und Imaginärteil) aufgeteilte Signal wie in der vorstehend zu den Figuren 1 bis 4 beschriebenen Weise gemischt werden. Die so gemischten komplexwertigen Signale werden über (hier auch dargestellte) analoge Bandpassfilter 17 und 18 analog bandpassgefiltert und dann in A/D-Wandlern 13', 13" digitalisiert. Dann werden die Signalteile in einer wie oben beschriebenen Weise in dem Signalprozessor 14 digital weiter verarbeitet, um die Daten zu extrahieren. Zu erkennen ist in dieser Figur auch leicht, dass auch das analoge Kontrollsignal, wenn es durch entsprechende Schaltstellung des Wechselschalters 10 generiert wird die Bandpassfilter 17 und 18 passiert und somit bandpassgefiltert wird. Durch diesen für die Umsetzung des erfindungsgemäßen Verfahrens nicht zwingend erforderliche Maßnahme kann eine noch bessere Unterdrückung von Störeinflüssen erreicht werden.

Das in den Figuren hier noch einmal veranschaulichte erfindungsgemäße Verfahren hat den besonderen Vorteil, dass dadurch, dass ein Kontrollsignal als Hochfrequenzsignal mit einem durch Mischen des Antwortsignals des Sensors mit dem Referenzsignal erhaltenen Datensignal, welches ebenfalls ein Hochfrequenzsignal ist, digital korreliert wird, und im Zusammenspiel mit der Bandpassfilterung sowohl des analogen Datensignals als auch der digitalen Signale, digitales Datensignal und digitales Kontrollsignal parasitäre Effekte, wie sie bei der drahtlosen Datenabfrage mit Hochfrequenztechnik auftreten, kompensiert werden und damit die Genauigkeit der Messwertermittlung deutlich erhöht wird.

### Bezugszeichenliste

- 1, 1': Abfragevorrichtung
- 2: Frequenzquelle
- 3: Lokaloszillator
- 4, 4': Aufwärtsmischer
- 5: Leistungsteiler
- 6: Signalleitung
- 7: Wechselschalter
- 8: Sende-/Empfangsantenne
- 9: Signalleitung
- 10: Wechselschalter
- 11: Signalleitung
- 12, 12': Abwärtsmischer
- 13, 13', 13": A/D-Wandler
- 14: Signalprozessor
- 15: Lokaloszillator
- 16: Quadraturphasengenerator
- 17: analoger Bandpassfilter
- 18: analoger Bandpassfilter
- 19: Quadraturphasengenerator

## Patentansprüche

1. Verfahren zur drahtlosen Abfrage von Daten von einem passiven, nach dem Prinzip der Verzögerungsleitung arbeitenden Element, insbesondere von einem solchen Oberflächenwellen-Bauteil, wobei ein erstes Hochfrequenzsignal einer ersten Frequenz zu dem Element gesendet und das Element so zum Aussenden eines Antwortsignals angeregt wird, wobei das Antwortsignal empfangen und in einem Mischer mit einem Referenzsignal gemischt und dabei ein Datensignal erzeugt wird, welches zum Extrahieren von Daten ausgewertet wird,
**dadurch gekennzeichnet, dass**
als Referenzsignal ein aus derselben Frequenzreferenz wie das erste Hochfrequenzsignal erzeugtes zweites Hochfrequenzsignal mit einer von der ersten Frequenz abweichenden zweiten Frequenz verwendet wird,
dass durch Mischen des ersten Hochfrequenzsignals mit dem Referenzsignal ein Kontrollsignal erzeugt wird,
dass das Datensignal analog bandpassgefiltert wird,
dass das gefilterte Datensignal und das Kontrollsignal jeweils in ein digitales Datensignal und ein digitales Kontrollsignal gewandelt werden,
dass das digitale Kontrollsignal und das digitale Datensignal jeweils digital bandpassgefiltert werden,
dass in einer digitalen Signalverarbeitung das digitale Datensignal und das digitale Kontrollsignal derart zu einem Ergebnissignal korreliert werden, dass eine digitale Kohärenz zwischen dem digitalen Datensignal und dem digitalen Kontrollsignal erzielt wird, und
dass aus dem Ergebnissignal die Daten enthaltende Rohdaten gewonnen werden.

2. Verfahren nach Anspruch 1, **dadurch gekennzeichnet, dass** das Mischen des ersten Hochfrequenzsignals mit dem Referenzsignal zum Erzeugen des Kontrollsignals in dem Mischer erfolgt, in dem auch das Antwortsignal mit dem Referenzsignal zum Erhalten des Datensignals gemischt wird.

3. Verfahren nach einem der vorhergehenden Ansprüche, **dadurch gekennzeichnet, dass** das Kontrollsignal vor dem Wandeln in ein digitales Kontrollsignal analog bandpassgefiltert wird.

4. Verfahren nach einem der vorhergehenden Ansprüche, **dadurch gekennzeichnet, dass** das Datensignal und das Kontrollsignal zeitlich nacheinander über ein und denselben A/D-Wandler digitalisiert und der digitalen Signalverarbeitung zugeführt werden, wobei in der digitalen Signalverarbeitung eine Zwischenspeicherung jedenfalls eines der digitalen Signale erfolgt.

5. Verfahren nach einem der vorhergehenden Ansprüche, **dadurch gekennzeichnet, dass** für das Senden des ersten Hochfrequenzsignals und für das Empfangen des Antwortsignals ein und dieselbe Antenne verwendet wird, wobei das Senden und das Empfangen zeitlich nacheinander erfolgt und die Antenne entsprechend umgeschaltet wird.

6. Verfahren nach einem der vorhergehenden Ansprüche, **dadurch gekennzeichnet, dass** für das Abfragen eines Datums eine Reihe von ersten Hochfrequenzsignalen nacheinander ausgesendet wird, wobei die erste Frequenz der ersten Hochfrequenzsignale für jeden Sendevorgang oder nach einer vorgegebenen Anzahl von Sendevorgängen verändert wird, wobei die Bildung des Kontrollsignals für die Auswertung eines mit einem auf den jeweiligen Sendevorgang erhaltenen Antwortsignals erzeugten Datensignals das erste Hochfrequenzsignal mit der für den Sendevorgang aktuell eingestellten ersten Frequenz mit dem Referenzsignal gemischt wird.

7. Verfahren nach Anspruch 6, **dadurch gekennzeichnet, dass** parallel zu der Änderung der ersten Frequenz der ersten Hochfrequenzsignale in der Reihe der ersten Hochfrequenzsignale auch die zweite Frequenz der zweiten Hochfrequenzsignale entsprechend in einer solchen Weise geändert wird, dass für das analoge Bandpassfiltern des analogen Datensignals ein Bandpassfilter mit fester Charakteristik verwendet werden kann.

8. Abfragevorrichtung (1) zum drahtlosen Abfragen von Daten von einem passiven, nach dem Prinzip der Verzögerungsleitung arbeitenden Element mit
- einer Einrichtung (3) zum Erzeugen eines ersten Hochfrequenzsignals mit einer ersten Frequenz,
- einer mit der Einrichtung (3) zum Erzeugen des ersten Hochfrequenzsignals verbindbaren Sendeantenne (8),
- einer Empfangsantenne (8),
- einem einen ersten Signaleingang und einen zweiten Signaleingang sowie einen Signalausgang aufweisenden Mischer (12),
- einem mit dem Signalausgang verbundenen A/D-Wandler (13), und
- einem mit dem A/D-Wandler (13) verbundenen Signalprozessor (14),
**gekennzeichnet durch**
- eine Einrichtung (15) zum Erzeugen eines Referenzsignals in Form eines zweiten Hochfrequenzsignals aus derselben Frequenzreferenz, auf der auch das erste Hochfrequenzsignal basiert, und mit einer zweiten, von der ersten Frequenz abweichenden Hochfrequenz,
- wobei der erste Signaleingang des Mischers (12) mit der Einrichtung (15) zum Erzeugen des Referenzsignals verbunden ist, und wobei der zweite Signaleingang wahlweise mit der Empfangsantenne (8) oder der Einrichtung (3) zum Erzeugen des ersten Hochfrequenzsignals verbindbar ist, und
- wobei der Signalprozessor (14) eingerichtet ist, mit dem A/D-Wandler (13) digitalisierte Signale in Form eines digitalen Datensignals und in Form eines digitalen Kontrollsignals zu speichern und diese digitalen Signale derart zu korrelieren, dass eine digitale Kohärenz zwischen dem digitalen Datensignal und dem digitalen Kontrollsignal hergestellt wird, und wobei der Signalprozessor (14) ferner eingerichtet ist, nach Herstellung einer digitalen Kohärenz der so korrelierten Signale aus einem dadurch gewonnenen digitalen Mischsignal Daten des Elements auszulesen.

9. Abfragevorrichtung (1) nach Anspruch 8, **gekennzeichnet durch** einen mit der Einrichtung (3) zum Erzeugen des ersten Hochfrequenzsignals verbundenen Leistungsteiler (5), der zwei Ausgänge aufweist, von denen ein erster mit der Sendeantenne (8), ein zweiter mit dem zweiten Signaleingang des Mischers (12) verbindbar ist.

10. Abfragevorrichtung nach einem der Ansprüche 8 oder 9, **dadurch gekennzeichnet, dass** die Sendeantenne und die Empfangsantenne durch eine einzige Sende-/Empfangsantenne (8) gebildet sind, die über einen Schalter (7) wahlweise mit der Einrichtung (3) zum Erzeugen des ersten Hochfrequenzsignals oder mit dem zweiten Signaleingang des Mischers (12) verbindbar ist.

11. Abfragevorrichtung nach einem der Ansprüche 8 bis 10, **dadurch gekennzeichnet, dass** sie ein Zeitvorgabeglied aufweist, welches die Aufzeichnungszeit des Kontrollsignals und die Empfangszeit des Sensorsignals identisch vorgibt.

## Claims

1. A method for wirelessly requesting data from a passive element, operating on the delay line principle, in particular from such a surface acoustic wave component, wherein a first high-frequency signal of a first frequency is sent to the element and the element to emit a response signal is excited,
wherein the response signal is received and mixed in a mixer with a reference signal, whereby a data signal is generated, which is evaluated for extracting data,
**characterised in that**
a second high-frequency signal, generated as the first high-frequency signal from the same frequency reference, is used as a reference signal, with a second frequency deviating from the first frequency,
that a control signal is generated by mixing the first high-frequency signal with the reference signal,
that the data signal is analogically band-pass filtered,
that the filtered data signal and the control signal are each converted into a digital data signal and a digital control signal is converted,
that the digital control signal and the digital data signal are each digitally band-pass filtered,
that the digital data signal and the digital control signal are correlated to a result signal in a digital signal processing in such a way that a digital coherence between the digital data signal and the digital control signal is achieved, and
that the raw data containing the data is obtained from the result signal.

2. The method of claim 1, **characterised in that** the first high-frequency signal is mixed with the reference signal for generating the control signal in the mixer, in which the response signal is mixed with the reference signal for obtaining the data signal.

3. The method as claimed in one of the preceding claims, **characterized in that** the control signal is analogically band-pass filtered before converting into a digital control signal.

4. The method as claimed in one of the preceding claims, **characterised in that** the data signal and the control signal are successively digitised via one and the same A/D converter and supplied to the digital signal processing, wherein at least one of the digital signals is stored intermediately in the digital signal processing.

5. The method as claimed in one of the preceding claims, **characterized in that** one and the same antenna is used for the transmission of the first high-frequency signal and for receiving the response signal,
wherein the transmission and the reception take place in a successive manner in time and the antenna is switched accordingly.

6. The method as claimed in one of the preceding claims, characterised that a series of first high-frequency signals is transmitted sequentially for inquiring a data, wherein the first frequency of the first high-frequency signals is changed for each transmission or after a predetermined number of transmission sequences, wherein the formation of the control signal for the evaluation of a data signal generated with a response signal obtained on the respective transmission process involves mixing of the first high-frequency signal with the first frequency currently set for the ransmission process, with the reference signal.

7. The method of claim 6, **characterised in that** parallel to the change of the first frequency of the first high-frequency signals in the series of the first high-frequency signals, the second frequency of the second high-frequency signals is changed accordingly in such a way that a bandpass filter with a fixed characteristic can be used for the analog bandpass filtering of the analog data signal.

8. An inquiring device (1) for wirelessly inquiring data from a passive element, operating on the delay line principle, with
- means (3) for generating a first high-frequency signal having a first frequency,
- a receiving antenna (8) which can be connected with the means (3) for generating the first high-frequency,
- a transmitting antenna (8),
- a first signal input and a second signal input as well as a mixer (12) having a signal output,
- an A/D converter (13) connected to the signal output and a signal processor (14) connected to A/D converter (13),
**characterised by**
- means (15) for generating a reference signal in the form of a second high-frequency signal from the same frequency reference, on which the first high-frequency signal is based, and with a second high frequency deviating from the first frequency,
- wherein the first signal input of the mixer (12) is connected with the means (15) for generating the reference signal, and wherein the second signal input is selectively connectable to the receiving antenna (8) or the means (3) for generating the first high-frequency signal, and
- wherein the signal processor (14) is arranged to store with the A/D converter (13) digitised signals in the form of a digital data signal and in the form of a digital control signal and to correlate these digital signals in such a way that a digital coherence between the digital data signal and the digital control signal is achieved, and wherein the signal processor (14) is further arranged to read data from the element after establishing a digital coherence of the signals thus correlated from a digital composite signal obtained thereby.

9. The inquiring device (1) according to claim 8, **characterized by** a power divider (5) connected with means (3) for generating the first high-frequency signal, having two outputs, one of which can be connected with the transmitting antenna (8), a second can be connected with the second signal input of the mixer (12).

10. The inquiring device according to one of the claims 8 or 9, **characterized in that** the transmitting antenna and the receiving antenna are formed by a single transmitting/receiving antenna (8), which can be connected via a switch (7) optionally with the means (3) for generating the first high-frequency signal or with the second signal input of the mixer (12).

11. The inquiring device according to one of the claims 8 to 10, **characterised in that** it comprises a time indicating element, which specifies the recording time of the control signal and the reception time of the sensor signal in an identical manner.

## Revendications

1. Procédé d'interrogation sans fil de données provenant d'un élément passif, fonctionnant sur le principe de la ligne à retard, en particulier à partir d'une telle composante d'onde acoustique de surface, dans lequel un premier signal haute fréquence d'une première fréquence est envoyé à l'élément et l'élément émettant un signal de réponse est excité,
dans lequel le signal de réponse est reçu et mélangé dans un mélangeur avec un signal de référence, moyennant quoi un signal de données est généré, qui est évalué pour extraire des données,
**caractérisé en ce**
**qu'**un second signal haute fréquence, généré comme premier signal haute fréquence provenant de la même référence de fréquence, est utilisé comme signal de référence, une seconde fréquence s'écartant de la première fréquence,
**qu'**un signal de commande est généré en mélangeant le premier signal haute fréquence avec le signal de référence,
**que** le signal de données est filtré de manière analogique par bande passante,
**que** le signal de données filtré et le signal de commande sont chacun convertis en un signal de données numériques et
**qu'**un signal de commande numérique est converti,
**que** le signal de commande numérique et le signal de données numériques sont chacun filtrés de manière numérique par bande passante,
**que** le signal de données numériques et le signal de commande numérique sont corrélés à un signal de résultat dans un traitement de signal numérique de telle manière qu'une cohérence numérique est obtenue entre le signal de données numériques et le signal de commande numérique, et
**que** les données brutes contenant les données sont obtenues à partir du signal de résultat.

2. Procédé selon la revendication 1, **caractérisé en ce que** le premier signal haute fréquence est mélangé avec le signal de référence pour générer le signal de commande dans le mélangeur, dans lequel le signal de réponse est mélangé au signal de référence pour obtenir le signal de données.

3. Procédé selon l'une des revendications précédentes, **caractérisé en ce que** le signal de commande est filtré de manière analogique par bande passante avant d'être converti en un signal de commande numérique.

4. Procédé selon l'une des revendications précédentes, **caractérisé en ce que** le signal de données et le signal de commande sont numérisés successivement par le biais d'un un seul et même convertisseur A/N et fournis au traitement du signal numérique, dans lequel au moins l'un des signaux numériques est stocké de manière intermédiaire dans le traitement du signal numérique.

5. Procédé selon l'une des revendications précédentes, **caractérisé en ce que** la seule et même antenne est utilisée pour la transmission du premier signal haute fréquence et pour recevoir le signal de réponse,
dans lequel la transmission et la réception s'effectuent de manière successive dans le temps et l'antenne est commutée en conséquence.

6. Procédé selon l'une des revendications précédentes, **caractérisé en ce qu'**une série de premiers signaux haute fréquence est transmise séquentiellement pour interroger une donnée, dans lequel la première fréquence des premiers signaux haute fréquence est modifiée pour chaque transmission ou après un nombre prédéterminé de séquences de transmission, dans lequel la formation du signal de commande pour l'évaluation d'un signal de données généré avec un signal de réponse obtenu sur le processus de transmission respectif implique le mélange du premier signal haute fréquence avec la première fréquence actuellement définie pour le processus de transmission, avec le signal de référence.

7. Procédé selon la revendication 6, **caractérisé en ce que** parallèlement au changement de la première fréquence des premiers signaux haute fréquence dans la série des premiers signaux haute fréquence, la seconde fréquence des seconds signaux haute fréquence est modifiée en conséquence de telle manière qu'un filtre passe-bande avec une caractéristique fixe puisse s'utiliser pour le filtrage passe-bande analogique du signal de données analogiques.

8. Dispositif d'interrogation (1) pour interroger sans fil des données provenant d'un élément passif, fonctionnant selon le principe de la ligne à retard,
- avec des moyens (3) pour générer un premier signal haute fréquence ayant une première fréquence,
- une antenne de réception (8) susceptible d'être connectée aux moyens (3) permettant de générer la première haute fréquence
- une antenne de transmission (8),
- une première entrée de signal et une seconde entrée de signal ainsi qu'un mélangeur (12) ayant une sortie de signal,
- un convertisseur A/N (13) connecté à la sortie du signal et un processeur de signal (14) connecté au convertisseur A/N (13),
**caractérisé par**
- des moyens (15) permettant de générer un signal de référence sous forme d'un second signal haute fréquence à partir de la même référence de fréquence, sur lequel le premier signal haute fréquence est fondé, et avec une seconde haute fréquence s'écartant de la première fréquence,
- dans lequel la première entrée de signal du mélangeur (12) est connectée aux moyens (15) permettant de générer le signal de référence, et dans lequel la seconde entrée de signal peut être connectée sélectivement à l'antenne de réception (8) ou aux moyens (3) permettant de générer le premier signal haute fréquence, et
- dans lequel le processeur de signal (14) est agencé pour stocker avec le convertisseur A/N (13) des signaux numérisés sous forme d'un signal de données numériques et sous forme d'un signal de commande numérique et pour corréler ces signaux numériques de manière à obtenir une cohérence numérique entre le signal de données numérique et le signal de commande numérique, et dans lequel le processeur de signal (14) est en outre agencé pour lire des données à partir de l'élément après avoir établi une cohérence numérique des signaux ainsi corrélés à partir d'un signal composite numérique ainsi obtenu.

9. Dispositif d'interrogation (1) selon la revendication 8, **caractérisé par** un diviseur de puissance (5) connecté aux moyens (3) permettant de générer le premier signal haute fréquence, ayant deux sorties dont l'une peut être connectée à l'antenne de transmission (8), une seconde pouvant être connectée à la seconde entrée de signal du mélangeur (12).

10. Dispositif d'interrogation selon l'une des revendications 8 ou 9, **caractérisé en ce que** l'antenne de transmission et l'antenne de réception sont formées par une seule antenne de transmission/de réception (8), qui peut être connectée par le biais d'un commutateur (7) éventuellement avec les moyens (3) permettant de générer le premier signal haute fréquence ou avec la seconde entrée de signal du mélangeur (12).

11. Dispositif d'interrogation selon l'une des revendications 8 à 10, **caractérisé en ce qu'**il comprend un élément indicateur de temps, qui spécifie la durée d'enregistrement du signal de commande et l'heure de réception du signal du capteur de manière identique.
